**Europäisches Patentamt**

(19) **European Patent Office**

**Office européen des brevets**

(11) Numéro de publication: **0 238 381 B1**

(12) **FASCICULE DE BREVET EUROPEEN**

(45) Date de publication du fascicule du brevet:
**06.09.89**

(51) Int. Cl.⁴: **G 01 D 11/12,** G 01 F 23/30, G 01 F 23/32

(21) Numéro de dépôt: **87400364.3**

(22) Date de dépôt: **19.02.87**

(54) **Dispositif amortisseur et dispositif de mesure du niveau de carburant dans un réservoir de véhicule automobile incorporant ce dispositif amortisseur.**

(30) Priorité: **21.02.86 FR 8602420**

(43) Date de publication de la demande:
**23.09.87 Bulletin 87/39**

(45) Mention de la délivrance du brevet:
**06.09.89 Bulletin 89/36**

(84) Etats contractants désignés:
**DE ES GB IT SE**

(56) Documents cités:
**EP-A- 0 025 425**
**DE-B- 1 228 814**
**GB-A- 383 623**
**US-A- 3 854 737**
**US-A- 3 915 462**
**US-A- 4 229 973**

(73) Titulaire: **JAEGER, 2, rue Baudin,
F-92303 Levallois-Perret (FR)**

(72) Inventeur: **Reymond, Philippe, 26, rue Georges Boulet,
F-91330 Yerres (FR)**

(74) Mandataire: **Martin, Jean-Jacques et al, Cabinet
REGIMBEAU 26, Avenue Kléber, F-75116 Paris (FR)**

ACTORUM AG

## Description

La présente invention concerne la mesure du niveau de carburant dans un réservoir de véhicule automobile.

La présente invention concerne plus précisément la mesure du niveau de carburant dans un réservoir de véhicule automobile à l'aide d'un dispositif comprenant un équipage mobile muni d'un flotteur qui suit le niveau du carburant, et un organe sensible, tel qu'un rhéostat, commandé par l'équipage mobile et délivrant une information représentative du niveau de carburant.

On sait que de tels dispositifs de mesure sont très sensibles aux vagues du carburant dans le réservoir, dues au profil de la route ou encore aux accélérations-décélérations du véhicule.

On a tenté, afin de limiter l'influence des vagues de carburant, d'associer un dispositif amortisseur à l'équipage mobile, de façon à lisser l'information délivrée par l'organe sensible du type rhéostat.

Comme cela est décrit dans les demandes de brevet FR-A-838 239, FR-A-2 306 433, DE-A-1 228 814 et DE-A-1 269 815, on a proposé des dispositifs amortisseurs comprenant une chambre cylindrique borgne dans laquelle se déplace un piston, la chambre et le piston étant reliés à des éléments différents de l'équipage mobile. Ces dispositifs amortisseurs se comportent comme un amortisseur hydraulique, le fluide hydraulique de cet amortisseur, chassé par le piston et freinant le déplacement de celui-ci étant constitué par le combustible du réservoir. On a également décrit dans le document US-A-4 229 973 un amortisseur similaire comprenant un piston logé dans une chambre étanche.

On a également proposé, comme décrit dans le document DE-B-1 155 262 et le document US-A-4 229 973 précité un dispositif amortisseur comprenant un boîtier définissant une chambre étanche contenant un fluide amortisseur visqueux, tel que du silicone, et recevant une palette susceptible de déplacement relatif par rapport au boîtier. La palette logée dans le boîtier est reliée à l'équipage mobile. Les déplacements de la palette dans la chambre remplie par un fluide visqueux, et par conséquent les déplacements de l'équipage mobile, sont freinés par l'écoulement contrôlé du fluide d'un côté de la palette vers lautre côté de celle-ci, par les interstices entre la palette et le boîtier.

De même, dans le cas des dispositifs amortisseurs à chambre et piston précités, l'effet d'amortissement et de freinage est dû à l'écoulement contrôlé du fluide d'un côté du piston vers l'autre côté de celui-ci par les interstices entre le piston et la chambre cylindrique.

On a également proposé dans le document EP-A-0 025 425 un dispositif amortisseur pour système d'arrosage rotatif du type comprenant un boîtier définissant une chambre étanche contenant un fluide amortisseur visqueux, tel que du silicone, et une palette montée à pivotement dans la chambre du boîtier, dans lequel le boîtier et la palette possèdent chacun une série de lamelles qui s'enchevêtrent de telle sorte que le déplacement relatif de la palette et du boîtier soit freiné par le frottement visqueux des lamelles enchevêtrées.

La présente invention a maintenant pour but principal de proposer un nouveau dispositif amortisseur qui produise un effet d'amortissement supérieur à celui obtenu avec les dispositifs amortisseurs jusqu'ici proposés.

Un autre but de la présente invention est de proposer un dispositif amortisseur de structure simple et donc aisément réalisable en grande série qui présente une réponse, c'est-à-dire un coefficient d'amortissement, parfaitement homogène.

Un autre but de la présente invention est de proposer un dispositif amortisseur qui présente une grande solidité et une bonne fiabilité.

Un autre but de la présente invention est de proposer un dispositif amortisseur qui puisse supporter sans dommage de fortes variations en température.

Un autre but de la présente invention est de proposer un dispositif amortisseur qui soit parfaitement étanche afin de ne pas polluer son environnement; c'est-à-dire un dispositif amortisseur qui ne diffuse aucune trace de fluide visqueux, en particulier de silicone, dans le réservoir ou le carburant, et qui inversement soit totalement insensible aux vapeurs de ce carburant.

Ces différents buts sont atteints dans le cadre de la présente invention par un dispositif amortisseur du type connu en soi par le document EP-A-0 025 425 comprenant un boîtier définissant une chambre étanche contenant un fluide amortisseur visqueux, tel que du silicone, et une palette montée à pivotement dans la chambre du boîtier, dans lequel le boîtier et la palette possèdent chacun une série de lamelles qui s'enchevêtrent de telle sorte que le déplacement relatif de la palette et du boîtier soit freiné par le frottement visqueux des lamelles enchevêtrées, caractérisé par le fait que:

— la chambre du boîtier a la forme d'un secteur hémicylindrique et

— la palette possède une ouverture angulaire inférieure à 180°, de sorte que le déplacement relatif de la palette et du boîtier soit freiné, en plus du frottement visqueux des lamelles enchevêtrées, par l'écoulement contrôlé du fluide d'un côté de la palette vers l'autre côté de celle-ci, par les interstices entre la palette et le boîtier.

Le dispositif amortisseur conforme à la présente invention permet par conséquent d'élever très sensiblement le coefficient d'amortissement par rapport aux dispositifs jusqu'ici proposés.

De façon avantageuse les lamelles prévues sur le boîtier et sur la palette sont formées de secteurs de cylindre.

Ainsi, selon un mode de réalisation considéré actuellement comme préférentiel, le boîtier définit une chambre étanche en forme de secteur hémicylindrique possédant une série de lamelles principales hémicylindriques, concentriques et contenant un fluide amortisseur visqueux, et la palette possède un voile plan sous la forme d'un secteur de disque présentant une ouverture angulaire inférieure à 180° et muni d'une série de lamelles secondaires d'allure cylindrique, concentriques insérées entre les lamelles principales.

Le cas échéant, les lamelles peuvent cependant être généralement planes et transversales à l'axe de pivotement de la palette.

Selon une caractéristique avantageuse de l'invention, l'espace défini entre deux lamelles adjacentes est compris entre 0,6 mm et 0,4 mm, et est de préférence de l'ordre de 0,5 mm.

Selon une autre caractéristique avantageuse de la présente invention, les lamelles de l'une au moins des deux séries prévues respectivement sur le boîtier et sur la palette possèdent des surfaces principales qui convergent légèrement vers leur bord libre selon un angle de convergence de l'ordre de 2 à 4°.

Selon l'invention la palette est de préférence solidaire d'un arbre traversant l'une des parois du boîtier et des moyens d'étanchéité sont prévus sur la périphérie de l'arbre pour empêcher que le fluide amortisseur visqueux ne sorte du boîtier et/ou pour empêcher qu'un fluide extérieur ne pénètre dans le boîtier. Ces moyens d'étanchéité comprennent avantageusement un joint torique à quatre lèvres en X ou deux joints toriques possédant chacun deux lèvres orientées dans des directions respectivement opposées.

De tels moyens d'étanchéité à quatre lèvres eux sont connus en soi des documents US-A-3 854 737 et US-A-3 915 462.

Les moyens d'étanchéité selon la présente invention, sont de préférence logés dans un manchon solidaire de l'une des parois du boîtier.

Afin de compenser les variations de pression à l'intérieur du boîtier et d'éviter les déformations de celui-ci dues aux dilatations thermiques du fluide amortisseur visqueux, la chambre interne du boîtier loge avantageusement une bulle d'air.

D'autres buts, caractéristiques et avantages de la présente apparaîtront à la lecture de la description détaillée qui va suivre et en regard des dessins annexés donnés à titre d'exemple non limitatif et sur lesquels:

la fig. 1 représente une vue générale du dispositif de mesure du niveau de liquide conforme à la présente invention,

la fig. 2 représente une vue de la chambre interne et des lamelles du boîtier d'amortisseur conforme à la présente invention,

la fig. 3 représente une vue en coupe du même boîtier selon un plan de coupe référencé III-III sur la figure 2,

la fig. 4 représente une vue de la palette du dispositif amortisseur conforme à la présente invention,

la fig. 5 représente une vue en coupe de cette palette selon un plan de coupe référencé V-V sur la figure 4,

la fig. 6 représente une vue d'un élément de palier du dispositif amortisseur conforme à la présente invention; la figure 6 représente plus précisément en demi-vue supérieure une vue extérieure du palier et en demi-vue inférieure une vue en coupe axiale de celui-ci,

la fig. 7 représente une vue d'un élément de joint du dispositif amortisseur conforme à la présente invention; la figure 7 représente plus précisément en demi-vue supérieure une vue en coupe du joint et en demi-vue inférieure une vue extérieure de celui-ci.

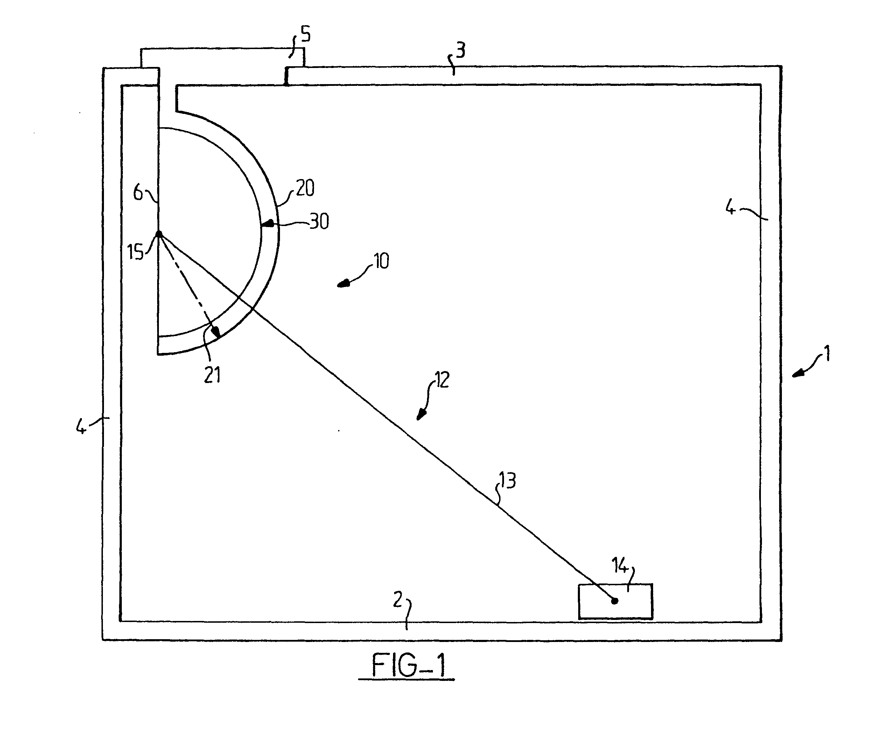

Sur la figure 1 on distingue un réservoir 1 qui loge le dispositif de mesure du niveau de carburant 10.

Le réservoir 1 comprend une paroi inférieure 2, une paroi supérieure 3 et une paroi latérale 4.

La paroi supérieure 3 est munie d'un bouchon 5 sur lequel est suspendue une console 6 qui porte le dispositif de mesure 10.

Ce dernier comprend un équipage mobile 12, un organe sensible du type rhéostat 20 et un dispositif amortisseur 30.

L'équipage mobile 12 est formé d'une tige 13 qui porte un flotteur 14. La tige 13 est portée à pivotement sur la console 6 autour d'un tourillon 15 d'axe horizontal. Ce tourillon 15 porte de plus le curseur 21 du rhéostat 20. Les liaisons filaires électriques accessibles à l'extérieur du réservoir et reliées l'une au curseur 21, l'autre à une extrémité de la piste résistive du rhéostat 20, classiques en soi, ne sont pas représentées sur les figures 1 pour simplifier l'illustration.

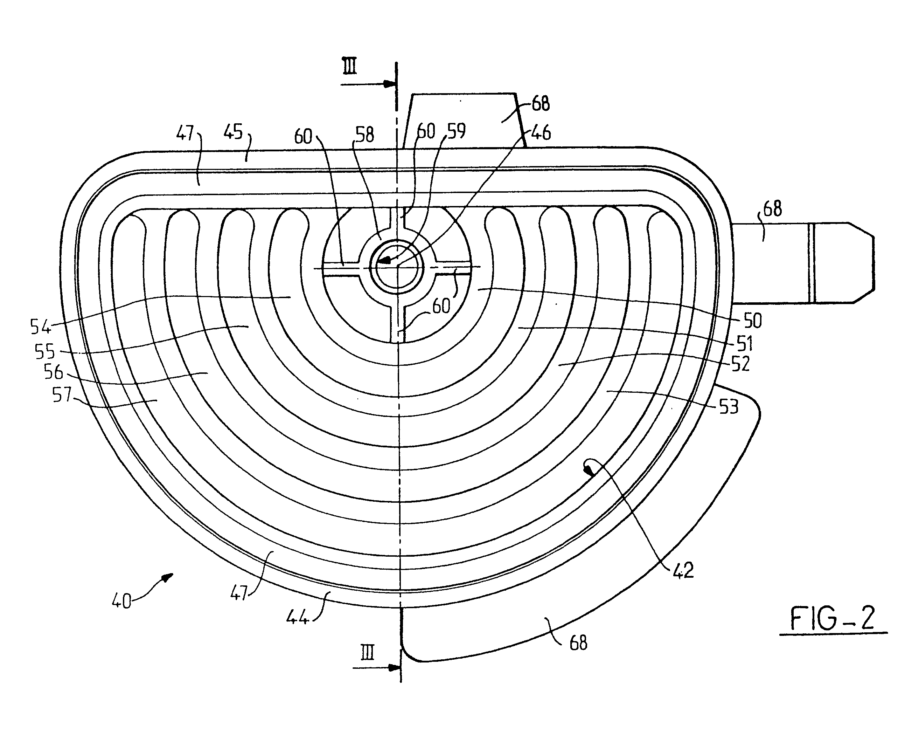

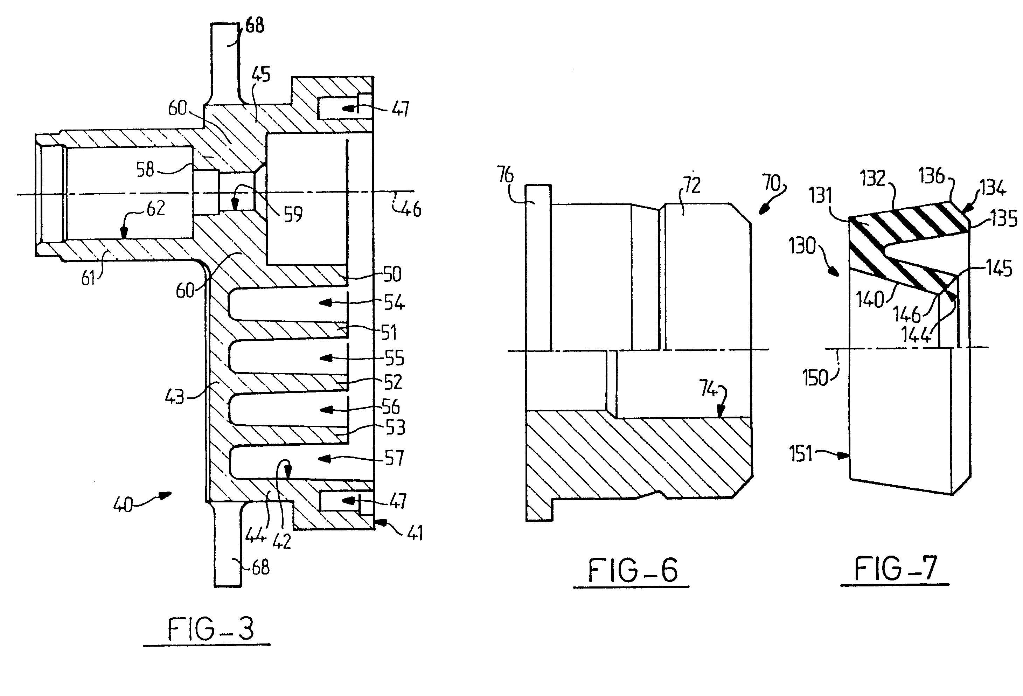

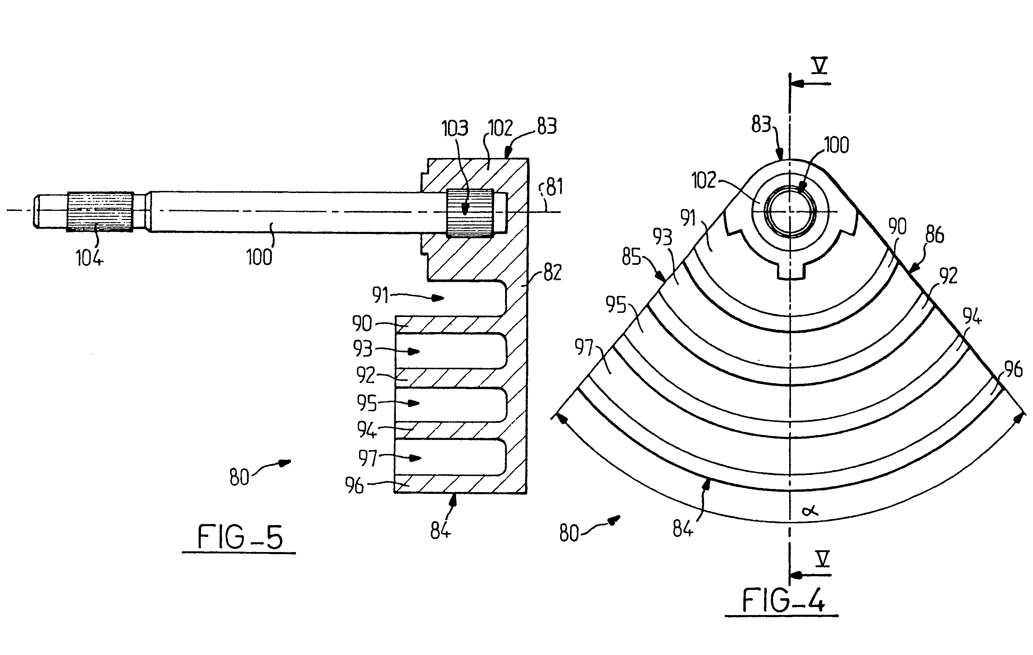

Pour l'essentiel, le dispositif amortisseur 30 comprend un boîtier 40 représenté sur les figures 2 et 3 et une palette représentée sur les figures 4 et 5.

Le boîtier 40 définit une chambre étanche 42 qui contient un fluide amortisseur tel que du silicone.

La chambre 42 est de préférence sensiblement hémi-cylindrique. La chambre 42 est délimitée par une paroi de base 43 et des parois 44, 45. La paroi de base 43 est plane et a la forme générale d'un demi disque. Les parois latérales 44, 45 s'étendent perpendiculairement à la paroi de base 43. La paroi latérale 44 est hémi-cylindrique et centrée sur un axe 46 qui s'étend perpendiculairement à la paroi de base 43. La paroi 45 est plane, parallèle à l'axe 46 et relie les deux extrémités de la paroi hémi-cylindrique 44.

La paroi plane 45 est excentrée par rapport à l'axe 46 de telle sorte que la paroi hémi-cylindrique 44 couvre une ouverture angulaire de l'ordre de 210° par rapport à l'axe 46.

La chambre 42 du boîtier est fermée par un couvercle non représenté. Le couvercle est fixé sur le bord libre des parois 44 et 45. Le couvercle s'étend généralement parallèlement à la paroi de base 43.

Pour obtenir une étanchéité sûre du boîtier au niveau de l'interface parois latérales 44, 45/ couvercle, lesdites parois latérales 44, 45 sont munies sur leur surface libre 41 parallèle à la paroi de base 43 d'une gorge 47 qui suit le contour de ces parois.

La gorge 47 est destinée à recevoir un joint d'étanchéité ou une nervure complémentaire prévue sur le couvercle.

Le boîtier 40 comprend de plus dans la chambre 42 une série de lamelles 50, 51, 52, 53.

Les lamelles sont sensiblement hémi-cylindriques et concentriques, centrées sur l'axe 46 précité. La hauteur des lamelles 50, 51, 52, 53 est inférieure à celle des parois latérales 44, 45. Les lamelles 50, 51, 52, 53 définissent en combinaison avec la paroi latérale hémi-cylindrique 44 une série de logements annulaires 54, 55, 56, 57 de section droite généralement rectangulaire, concentriques et centrés sur l'axe 46.

La paroi de base 43 est munie près de la paroi latérale plane 45 d'un fourreau cylindrique 58 possédant un alésage central 59 centré sur l'axe 46.

Le fourreau 58 est renforcé par quatre nervures radiales extérieures 60. L'alésage 59 sert de palier à un arbre 100 solidaire de la palette 80.

L'alésage 59 traverse la paroi de base 43.

De plus, la paroi de base 43 porte sur l'extérieur, c'est-à-dire à l'opposé de la chambre 42 un manchon 61 dont l'espace interne cylindrique 62 est centré sur l'axe 46 et prolonge l'alésage 59.

Le manchon 51 est destiné à recevoir un deuxième élément de palier 70 portant l'arbre 100 à rotation. L'élément de palier 70 est représenté sur la figure 6. Pour l'essentiel, cet élément 70 comprend un collier 72 d'enveloppe générale cylindrique dont le diamètre externe s'adapte au diamètre interne de l'espace 62 défini par le manchon 61.

L'élément de palier 70 possède un alésage interne étagé 74 qui porte l'arbre 100 à rotation. L'élément de palier 70 est muni sur sa surface extérieure d'une collerette annulaire 76 destinée à venir en butée sur le manchon 61 pour définir la position axiale de l'élément de palier 70 par rapport au manchon.

Enfin, le boîtier 40 et muni sur sa surface extérieure d'une pluralité de structures d'accrochage portant la référence générale 68. Les structures d'accrochage 68 sont adaptées pour permettre la fixation du boîtier 40 sur la console 6 du dispositif de mesure. Ces structures d'accrochage 68 permettent de réaliser le boîtier amortisseur sous forme d'un sous-ensemble autonome adaptable sur différents types de console et par conséquent dans différents types de dispositifs de mesure.

Ces structures d'accrochage 68 sont susceptibles de prendre de nombreuses formes de réalisation et ne seront donc pas décrites en détail par la suite.

On va maintenant décrire la structure de la palette 80 représentée sur les figures 4 et 5.

Cette palette 80 comprend un voile plan 82 qui a la forme générale d'un secteur de disque.

Plus précisément, le voile 82 est délimité par une surface 83 en forme de secteur de cylindre centré sur un axe 81, de faible rayon, une surface 84 en forme de secteur de cylindre, centrée également sur l'axe 81 mais présentant un rayon supérieur à la surface 83 et deux surfaces planes 85, 86 parallèles à l'axe 81, qui tangentent la surface 83 et bornent la surface 84.

Le rayon de la surface 83 correspond sensiblement à l'excentrement interne de la paroi latérale plane 45 du boîtier par rapport à l'axe 46. De plus, le rayon de la surface 84 correspond sensiblement au rayon interne de la paroi latérale hémi-cylindrique 44 par rapport à l'axe 46.

L'ouverture angulaire des surfaces 85, 86 est de l'ordre de 75°.

La palette 80 possède de plus une série de lamelles 90, 92, 94, 96 destinées à s'intercaler entre les lamelles 50, 51, 52, 53 prévues sur le boîtier 40.

Les lamelles 90, 92, 94 et 96 sont formées de secteurs de cylindre concentriques centrés sur l'axe 81. Les lamelles 90, 92, 94 et 96 s'étendent perpendiculairement au voile plan 82.

Ces lamelles 90, 92, 94 et 96 définissent une série de logements annulaires 91, 93, 95 et 97.

La répartition radiale, par rapport à l'axe 81, des lamelles 90, 92, 94 et 96 correspond à la répartition radiale des logements annulaires 54, 55, 56, 57 prévus sur le boîtier 40, par rapport à l'axe 46. Inversement, la répartition radiale par rapport à l'axe 46 des lamelles 50, 51, 52, 53 correspond à la répartition radiale des logements 91, 93, 95 et 97 par rapport à l'axe 81.

Les épaisseurs des lamelles 50, 51, 52, 53 d'une part, et 90, 92, 94, 96 d'autre part, ainsi que les épaisseurs des logements annulaires 91, 93, 95, 97 d'une part, et 54, 55, 56, 57 d'autre part, destinés à recevoir lesdites lamelles, considérées dans une direction radiale par rapport à leur axe respectif 46 ou 81 est déterminée de telle sorte que le jeu défini entre deux lamelles adjacentes appartenant l'une au boîtier 40, l'autre à la palette 80 soit de l'ordre de 0,6 à 0,4 mm et de préférence sensiblement égal à 0,5 mm.

Un tel jeu semble approprié pour obtenir un frottement visqueux optimum entre les différentes lamelles, au cours du déplacement relatif de la palette 80 par rapport au boîtier 40.

Par ailleurs, comme cela apparaît à l'examen des figures, de préférence les lamelles de l'une au moins des deux séries prévues respectivement sur le boîtier 40 et sur la palette 80 possèdent des surfaces principales (généralement parallèles à l'axe de pivotement 81 et/ou 46) qui convergent légèrement vers leur bord libre selon un angle de convergence de l'ordre de 2 à 4°.

Selon la représentation donnée sur les figures annexées, les surfaces principales des lamelles 50, 51, 52 et 53 prévues sur le boîtier présentent une telle convergence de l'ordre de 2 à 4°.

On remarquera par ailleurs à l'examen des figures 4 et 5 annexées que le voile plan 82 porte du côté des lamelles 90, 92, 94 et 96 un renforcement cylindrique 102, centré sur l'axe 81 par l'intermédiaire duquel la palette 80 est chassée sur un arbre 100 coaxial à l'axe 81. De préférence, la palette 80 est réalisée en matière plastique et surmoulée sur l'arbre 100. Celui-ci s'étend du même côté du voile plan 82 que les lamelles 90, 92, 94, 96.

Des moyens sont prévus pour assurer l'étanchéité du dispositif amortisseur sur la périphérie de l'arbre 100. Selon la présente invention, ces moyens d'étanchéité sont formés d'un joint torique à quatre lèvres en X.

Plus précisément, de préférence, les moyens d'étanchéité comprennent deux joints toriques adossés possédant chacun deux lèvres, orientées dans des directions respectivement opposées et formant en combinaison un ensemble de joints à quatre lèvres en X.

On a représenté sur la figure 7 un tel joint torique 130 possédant deux lèvres 132, 140.

Sur la figure 7 on a référencé 150 l'axe du joint et 131 l'âme annulaire de celui-ci. Les deux lèvres 132, 140 s'étendent généralement parallèlement à l'axe 150, tout en divergeant légèrement en direction axiale. On distingue en effet sur la figure 7 une lèvre interne 140 qui converge vers l'axe 150 en éloignement de l'âme 131 et une lèvre externe 132 qui diverge par rapport à l'axe 150 en éloignement de l'âme 131.

Les extrémités 134, 144 des lèvres 132 et 140 sont biseautées selon des surfaces inclinées dans des sens opposés par rapport à l'axe 150. Ainsi, la lèvre externe 132 possède une arête en pointe 135 et une arête externe 136 plus rapprochée de l'âme 131 que la pointe 135.

De façon généralement similaire la lèvre interne 140 possède une extrémité en pointe 145 et une arête interne 146 plus rapprochée de l'âme 131 que la pointe 145.

Par ailleurs, de préférence la lèvre interne 140 présente une extension axiale inférieure à celle de la lèvre externe 132.

On notera à l'examen des figures que l'échelle des figures 6 et 7 est supérieure à l'échelle de la figure 3, l'élément de palier 70 et le joint à lèvres 130 étant destinés à pénétrer dans l'espace interne cylindrique 62 du manchon 61.

L'assemblage du dispositif amortisseur conforme à la présente invention est réalisé comme suit.

Dans un premier temps, l'arbre 100 de la palette 80 est introduit dans l'alésage 59 formant palier et les lamelles 90, 92, 94 et 96 de la palette sont poussées dans les logements annulaires 54, 55, 56, 57 du boîtier, les lamelles 50, 51, 52, 53 de ce dernier pénétrant simultanément dans les logements 91, 93, 95, 97 de la palette.

On remarquera que pour définir une immobilisation certaine en rotation de l'arbre 100 par rapport à la palette 80, de préférence, l'extrémité 102 de l'arbre 100 sur laquelle le voile 82 est surmoulé est cannelée axialement.

Deux joints toriques à lèvres 130 du type représenté sur la figure 7 sont engagés sur l'arbre 100 dans le manchon 61.

Le premier joint 130 engagé dans le manchon 61 a ses lèvres 132, 140 dirigées vers la paroi de base 43. Le second joint 130 introduit dans le manchon 61 a ses lèvres 132, 140 dirigées à l'opposé de la paroi de base 43.

Les joints 130 sont adossés et viennent en contact par la paroi plane 151 de l'âme 131 s'étendant perpendiculairement à l'axe 150.

L'arête 136 des lèvres externes 132 repose contre la surface de l'espace interne cylindrique 62 du manchon 61. L'arête 146 des lèvres internes 140 repose contre la périphérie extérieure de l'arbre 100.

Le joint 130 engagé en premier dans le manchon 61 assure l'étanchéité de l'intérieur de la chambre 42 vers l'extérieur, une surpression dans la chambre 42 tendant en effet à renforcer l'application des lèvres 132, 140 de ce joint respectivement contre la paroi de l'espace cylindrique 62 du manchon et contre l'arbre central 100.

Inversement, le joint 130 engagé en second dans le manchon 61 assure l'étanchéité du dispositif amortisseur, de l'extérieur vers la chambre interne 42.

Une dépression à l'intérieur de la chambre 42 tend en effet à renforcer le contact des lèvres 132, 140 de ce second joint contre la surface interne de l'espace cylindrique 62 du manchon et la surface périphérique extérieure de l'arbre 100 respectivement.

Les joints 130 sont enfermés dans le manchon 61 grâce à l'élément de palier 70 immobilisé sur l'extrémité du manchon 61.

Simultanément, on obtient un guidage précis et fiable à rotation de l'arbre 100 grâce aux deux paliers 59, 74.

Un fluide visqueux tel que du silicone est introduit dans la chambre 42 puis cette chambre est fermée de façon étanche par un couvercle immobilisé sur les parois latérales 44, 45.

Le dispositif amortisseur est alors prêt à l'utilisation et peut être immobilisé sur la console 6 grâce aux structures 68, le curseur 21 du rhéostat 20 et le levier 13 de l'équipage mobile 12 étant fixés à rotation sur l'arbre 100, par exemple sur l'extrémité 104 de celui-ci, cannelée axialement.

On remarquera que le dispositif amortisseur conforme à la présente invention comprend un nombre limité de pièces. De ce fait, son montage est simple et rapide. De plus, le dispositif amortisseur conforme à la présente invention s'avère particulièrement robuste et fiable.

Le déplacement à pivotement de la palette 80 dans la chambre 42 du boîtier 40 est freiné en combinaison, d'une part, par l'écoulement contrôlé du fluide d'un côté de la palette vers l'autre de celle-ci par les interstices définis entre la palette et le boîtier, d'autre part, par le frottement visqueux des lamelles 90, 92, 94, 96 et 50, 51, 52, 53 intercalées.

L'homme de l'art comprendra aisément qu'un tel dispositif amortisseur permet d'obtenir un coefficient d'amortissement nettement supérieur à celui obtenu à l'aide des dispositifs amortisseurs antérieurs, tels que décrits par exemple dans le document DE-B-1 155 262 précité, dans lequel le freinage de la palette était obtenu seulement par l'écoulement contrôlé du fluide d'un côté de la palette vers l'autre côté de celle-ci, par les interstices entre la palette et le boîtier.

Par ailleurs, l'enchevêtrement de séries de lamelles prévues respectivement sur le boîtier et sur la palette mobile permet d'obtenir un auto-centrage très précis de ces deux éléments.

On notera de plus que l'influence des variations de température sur l'écoulement contrôlé du fluide de part et d'autre de la palette est opposée à l'influence des variations de température sur le frottement visqueux entre les lamelles.

En effet, si la température s'élève, l'écoulement contrôlé du fluide d'un côté de la palette vers l'autre côté est facilité dans la mesure où le fluide amortisseur visqueux devient plus fluide, ce qui tendrait à affaiblir le freinage de la palette, mais inversement la dilatation résultante des lamelles 90, 92, 94, 96 et 50, 51, 52, 53 élève le frottement visqueux en raison de la diminution correspondante de jeu entre les lamelles, ce qui conduit à une compensation du freinage de la palette.

A l'opposé, lorsque la température ambiante diminue, l'effet de freinage dû à l'écoulement contrôlé de fluide d'un côté vers l'autre de la palette est renforcé, mais inversement le frottement visqueux entre les lamelles est diminué dû à une augmentation correspondante du jeu entre celles-ci.

La forme hémi-cylindrique du boîtier du dispositif amortisseur conforme à la présente invention permet, comme cela apparaît à l'examen de la figure 1, tout en disposant d'un bouchon 5 assurant l'accès au volume interne du réservoir, de dimension limitée, d'obtenir un tourillon commun au dispositif amortisseur, au curseur 21 du rhéostat 20 et au levier 13 de l'équipage mobile.

Selon un mode de réalisation donné à titre d'exemple non limitatif:

quatre lamelles 90, 92, 94 et 96 sont prévues sur la palette 80 et quatre lamelles 50, 51, 52 et 53 sont prévues sur le boîtier 40,

l'épaisseur radiale des lamelles 50, 51, 52, 53 est de l'ordre de 1,8 mm,

l'épaisseur radiale des lamelles 90, 92, 94, 96 est de l'ordre 1,2 mm,

l'épaisseur radiale des logements annulaires 54, 55, 56 et 57 prévus sur le boîtier est de l'ordre de 2,2 mm,

l'épaisseur radiale des logements 91, 93, 95 et 97 prévus sur la palette 80 est de l'ordre de 2,8 mm,

la hauteur des lamelles considérées perpendiculairement à la paroi de base 43 et au voile 82 est de l'ordre de 8 mm.

Bien entendu, la présente invention n'est pas limitée au mode de réalisation qui vient d'être décrit mais s'étend à toutes variantes conformes à son esprit.

Ainsi, par exemple, le dispositif amortisseur peut comporter un nombre de lamelles différent. Le dispositif amortisseur peut comprendre des lamelles généralement planes et transversales à l'axe de pivotement de la palette.

Enfin, selon la disposition précédemment décrite, le boîtier 40 est fixe et la palette 80, reliée à l'équipage mobile est déplacée à pivotement dans la chambre 42 du boîtier.

Inversement, on peut prévoir de relier le boîtier 40 à rotation, à l'équipage mobile 12 et de supporter fixe la palette 80 sur la console 6 du dispositif de mesure.

On notera que selon une caractéristique importante de la présente invention, pour autoriser une dilatation thermique du fluide amortisseur visqueux dans la chambre 42, sans risquer d'induire des fuites de celui-ci vers l'extérieur du boîtier, et sans entraîner de déformation du boîtier, lors du remplissage de la chambre 42 en fluide visqueux il est nécessaire de prévoir une bulle d'air.

**Revendications**

1. Dispositif amortisseur du type comprenant un boîtier (40) définissant une chambre (42) étanche contenant un fluide amortisseur visqueux, tel que du silicone, et une palette (80) montée à pivotement dans la chambre (42) du boîtier, dans lequel boîtier (40) et la palette (80) possèdent chacun une série de lamelles (50, 51, 52, 53; 90, 92, 94, 96) qui s'enchevêtrent de telle sorte que le déplacement relatif de la palette (80) et du boîtier (40) soit freiné par le frottement visqueux des lamelles enchevêtrées, caractérisé par le fait que:

la chambre (42) du boîtier a la forme d'un secteur hémicylindrique et

la palette (80) possède une ouverture angulaire inférieure à 180°, de sorte que le déplacement relatif de la palette (80) et du boîtier (40) soit freiné, en plus du frottement visqueux des lamelles enchevêtrées, par l'écoulement contrôlé du fluide d'un côté de la palette vers l'autre côté de celle-ci, par les interstices entre la palette (80) et le boîtier (40).

2. Dispositif amortisseur selon la revendication 1, caractérisé par le fait que les lamelles (50, 51, 52, 53; 90, 92, 94, 96) prévues sur le boîtier (40) et sur la palette (80) sont formées de secteurs de cylindre.

3. Dispositif amortisseur selon l'une des revendications 1 à 2, caractérisé par le fait que le boîtier (40) possède, dans la chambre étanche (42) en forme de secteur hémicylindrique, une série de lamelles principales (50, 51, 52, 53) hémicylindriques, concentriques et que la palette (80) possède un voile plan (82) sous la forme d'un secteur de disque présentant une ouverture angulaire inférieure à 180° et muni d'une série de lamelles secondaires (90, 92, 94, 96) d'allure hémicylindrique, concentriques, insérées entre les lamelles principales.

4. Dispositif amortisseur selon la revendication 1, caractérisé par le fait que les lamelles sont généralement planes et transversales à l'axe de pivotement de la palette (80).

5. Dispositif amortisseur selon l'une des revendications 1 à 4, caractérisé par le fait que l'espace défini entre deux lamelles adjacentes (50, 51, 52, 53; 90, 92, 94, 96) est compris entre 0,6 et 0,4 mm et de préférence de l'ordre de 0,5 mm.

6. Dispositif amortisseur selon l'une des revendications 1 à 5, caractérisé par le fait que les lamelles de l'une au moins des deux séries prévues respectivement sur le boîtier (40) et la palette (80) possèdent des surfaces principales qui convergent légèrement vers leur bord libre selon un angle de convergence de l'ordre de 2 à 4°.

7. Dispositif amortisseur selon l'une des revendications 1 à 6, caractérisé par le fait que la palette (80) est solidaire d'un arbre (100) traversant l'une des parois (43) du boîtier (40) et des moyens d'étanchéité (130) sont prévus sur la périphérie de l'arbre (100) pour empêcher que le fluide amortisseur visqueux ne sorte du boîtier (40) et/ou pour empêcher qu'un fluide extérieur ne pénètre dans le boîtier.

8. Dispositif amortisseur selon la revendication 7, caractérisé par le fait que les moyens d'étanchéité (130) comprennent un joint torique à quatre lèvres en X.

9. Dispositif amortisseur selon l'une des revendications 7 ou 8, caractérisé par le fait que les moyens d'étanchéité comprennent deux joints toriques (130) possédant chacun deux lèvres (132, 140) orientées dans des directions respectivement opposées.

10. Dispositif amortisseur selon l'une des revendications 7 à 9, caractérisé par le fait que les moyens d'étanchéité (130) sont logés dans un manchon (61) solidaire de l'une des parois (43) du boîtier.

11. Dispositif amortisseur selon l'une des revendications 1 à 10, caractérisé par le fait que la chambre (42) du boîtier loge une bulle d'air autorisant les dilatations thermiques du fluide amortisseur visqueux sans fuite de celui-ci à l'extérieur du boîtier.

12. Dispositif de mesure du niveau de carburant dans un réservoir de véhicule automobile du type comprenant un équipage mobile (12) muni d'un flotteur (14) qui suit le niveau du carburant, un organe sensible (20) tel qu'un rhéostat commandé par l'équipage mobile et délivrant une information représentative du niveau de carburant, et un dispositif amortisseur (30) conforme à l'une des revendications 1 à 11.

**Patentansprüche**

1. Dämpfungsvorrichtung der Bauart mit einem Gehäuse (40), welches eine dichte, ein viskoses Dämpfungsfluid wie Silikon enthaltende Kammer (42) und einen schwenkbar in der Kammer (42) des Gehäuses angeordneten Schieber (80) umfaßt, wobei das Gehäuse (40) und der Schieber (80) jeweils eine Anzahl Lamellen (50, 51, 52, 53; 90, 92, 94, 96) aufweisen, die sich derart überlappen, daß eine relative Verlagerung des Schiebers (80) bezüglich des Gehäuses (40) durch viskose Reibung der sich überlappenden Lamellen gebremst wird, dadurch gekennzeichnet, daß

die Kammer (42) des Gehäuses die Gestalt eines halbzylindrischen Segmentes aufweist und

der Schieber (80) einen Öffnungswinkel von weniger als 180° aufweist, derart, daß eine relative Verlagerung des Schiebers (80) bezüglich des Gehäuses (40) außer durch die viskose Reibung der sich überlappenden Lamellen durch die kontrollierte Strömung des Fluids von einer Seite des Schiebers zu dessen anderen Seite durch die Spalte zwischen dem Schieber (80) und dem Gehäuse (40) gebremst wird.

2. Dämpfungsvorrichtung nach Anspruch 1, dadurch gekennzeichnet, daß die Lamellen (50, 51, 52, 53; 90, 92, 94, 96) des Gehäuses (40) und des Schiebers (80) von zylindrischen Sektoren gebildet sind.

3. Dämpfungsvorrichtung nach Anspruch 1 oder 2, dadurch gekennzeichnet, daß das Gehäuse (40) in der dichten Kammer (42) von halbzylindrischer Gestalt eine Anzahl halbzylindrische, konzentrische Primärlamellen (50, 51, 52, 53) aufweist, und daß der Schieber (80) einen ebenen Flügel (82) in Form eines scheibenartigen Sektors mit einem Öffnungswinkel von weniger als 180° sowie eine Anzahl Sekundärlamellen (90, 92, 94, 96) halbzylindrischen, konzentrischen Verlaufes aufweist, welche zwischen die Primärlamellen ragen.

4. Dämpfungsvorrichtung nach Anspruch 1, dadurch gekennzeichnet, daß die Lamellen im wesentlichen eben sind und quer zur Schwenkachse des Schiebers (80) stehen.

5. Dämpfungsvorrichtung nach einem der Ansprüche 1 bis 4, dadurch gekennzeichnet, daß der zwischen zwei benachbarten Lamellen (50, 51, 52, 53; 90, 92, 94, 96) gebildete Spalt zwischen 0,6 und 0,4 mm und vorzugsweise in der Größenordnung von 0,5 mm liegt.

6. Dämpfungsvorrichtung nach einem der Ansprüche 1 bis 5, dadurch gekennzeichnet, daß die Lamellen mindestens zweier Lamellenpaare des Gehäuses (40) und des Schiebers (80) Hauptflächen aufweisen, welche geringfügig zu ihrem freien Rand hin unter einem Konvergenzwinkel zwischen 2 und 4° konvergieren.

7. Dämpfungsvorrichtung nach einem der Ansprüche 1 bis 6, dadurch gekennzeichnet, daß der Schieber (80) fest mit einer Welle (100) verbunden ist, welche eine der beiden Wände (43) des Gehäuses (40) durchsetzt, und daß Dichtmittel (130) um den Umfang der Welle vorgesehen sind, um viskoses Dämpfungsfluid an einem Austreten aus dem Gehäuse (40) und/oder äußeres Fluid an einem Eindringen in das Gehäuse zu hindern.

8. Dämpfungsvorrichtung nach Anspruch 7, dadurch gekennzeichnet, daß die Dichtmittel (130) eine torische Manschette mit vier in Gestalt eines X angeordneten Lippen aufweist.

9. Dämpfungsvorrichtung nach Anspruch 7 oder 8, dadurch gekennzeichnet, daß die Dichtmittel zwei torische Manschetten (130) aufweisen, welche jeweils zwei Lippen (132, 140) aufweisen, die in entgegengesetzten Richtungen orientiert sind.

10. Dämpfungsvorrichtung nach einem der Ansprüche 7 bis 9, dadurch gekennzeichnet, daß die Dichtmittel (130) in einer Muffe (61) aufgenommen sind, welche einstückig mit einer der Wände (43) des Gehäuses ist.

11. Dämpfungsvorrichtung nach einem der Ansprüche 1 bis 10, dadurch gekennzeichnet, daß die Kammer (42) des Gehäuses eine Luftblase enthält, welche Wärmeausdehnungen des viskosen Dämpfungsfluids ohne dessen Entweichen nach außen aus dem Gehäuse heraus zuläßt.

12. Niveaumeßvorrichtung für Kraftstoff in einem Tank eines Kraftfahrzeuges der Bauart mit einer beweglichen Einrichtung (12) mit Schwimmer (14), welcher dem Kraftstoffniveau folgt, einem Meßorgan (20) wie einem Einstellwiderstand, der durch die bewegliche Einrichtung gesteuert ist und eine für das Kraftstoffniveau repräsentative Information abgibt, und einer Dämpfungsvorrichtung (30) nach einem der Ansprüche 1 bis 11.

**Claims**

1. A damping device of the type, comprising a housing (40) defining a sealed chamber (42) containing a viscous damping fluid, such as silicone, and a blade (80) supported to pivot in the chamber (42) of the housing, wherein the housing (40) and the blade (80) possess respective series of interleaved fins (50, 51, 52, 53; 90, 94, 96), so that the relative displacement between the blade (80) and the housing (40) is braked by viscous friction between the interleaved fins, characterized by the fact that:

the chamber (42) of the housing is in the form of a semicylindrical sector, and

the blade (80) defines a sector having an angle of less than 180°, so that the relative displacement between the blade (80) and the housing (40) is braked, further to the viscous friction between the interleaved fins, by the controlled flow of the fluid from one side of the blade to the other, via interstices between the blade (80) and the housing (40).

2. A damping device according to claim 1, characterized by the fact that the fins (50, 51, 52, 53; 90, 92, 94, 96) provided in the housing (40) and on the blade (80) are in the form of cylindrical sectors.

3. A damping device according to one of claims 1 and 2, characterized by the fact that the housing (40) possesses, in the sealed chamber (42) in the form of a semicylindrical sector, a series of concentric semicylindrical main fins (50, 51, 52, 53), and wherein the blade (80) includes a plane sheet (82) in the form of a sector of a disk having an angle of less than 180° between its edges, and provided with a series of concentric semicylindrical secondary fins (90, 92, 94, 96) which are inserted between the main fins.

4. A damping device according to claim 1, characterized by the fact that the fins are generally plane and extend transversely to the pivot axis of the blade (80).

5. A damping device according to one of claims 1 to 4 characterized by the fact that the gaps defined between adjacent pairs of fins (50, 51, 52, 53; 90, 92, 94, 96) have a width lying in the range 0.6 mm to 0.4 mm and are preferably about 0.5 mm.

6. A damping device according to one of claims 1 to 5 characterized by the fact that the fins of at least one of the two series of fins provided respectively inside the housing (40) and on the blade (80) are provided with main surfaces which converge slightly towards their free edges with a convergence angle of about 2° to about 4°.

7. A damping device according to one of claims 1 to 6, characterized by the fact that the blade (80) is fixed to a shaft (100) passing through one of the walls (43) of the housing (40), and wherein sealing means (130) are provided around the periphery of the shaft (100) to prevent the viscous damping fluid from leaving the housing (40) and/or to prevent a fluid outside the housing from penetrating therein.

8. A damping device according to claim 7, characterized by the fact that the sealing means (130) include a sealing ring having four lips in an X-configuration.

9. A damping device according to one of claims 7 or 8, characterized by the fact that the sealing means comprise two sealing rings (130) each having two lips (132, 140) with the lips of the two sealing rings pointing in opposite directions.

10. A damping device according to one of claims 7 to 9, characterized by the fact that the sealing rings (130) are received in a sleeve (61) which is fixed to one of the walls (43) of the housing.

11. A damping device according to one of claims 1 to 10, characterized by the fact that the chamber (42) of the housing receives a bubble of air to allow the viscous damping fluid to change volume with changing temperature without leaking from the housing.

12. A device for measuring the level of fuel in a motor vehicle fuel tank, the device being of the type comprising moving equipment (12) including a float (14) which follows the level of the fuel and a sensitive member (20) such as a rheostat under the control of the moving equipment and delivering a signal representative of the fuel level, said measuring device further including a damping device (30) according to one of claims 1 to 11.

FIG_1

EP 0 238 381 B1

III

68

47  45  60  58  60  59  46

68

54

50

55

51

56

52

57

53

42

40

47

44

68

III

FIG-2

EP 0 238 381 B1

11

FIG-7

FIG-6

FIG-3

FIG-4

FIG-5

15